# EUROPEAN PATENT SPECIFICATION

(11) **EP 3 587 882 B1**
(45) Date of publication and mention of the grant of the patent: **16.02.2022**
(21) Application number: 18756590.8
(22) Date of filing: 21.02.2018
(51) Int. Cl.: F16L 11/06, C08L 23/26, C08L 77/02, F16L 11/12, B32B 27/32, B32B 1/08, B32B 5/02, B32B 25/10, B32B 25/14, B32B 27/12, B32B 27/20, B32B 27/22, B32B 27/30, B32B 27/34, B32B 27/36, B32B 27/40

(54) **HYDROGEN TRANSPORT COMPONENT**
WASSERSTOFFTRANSPORTKOMPONENTE
ÉLÉMENT DE TRANSPORT D'HYDROGÈNE

(30) Priority: 24.02.2017 JP 2017033914
(43) Date of publication of application: 01.01.2020
(73) Proprietor: Bridgestone Corporation, Tokyo 104-8340 (JP)
(72) Inventor: KANESUGI, Hiroyuki, Tokyo 104-8340 (JP); SUGI, Shinichiro, Tokyo 104-8340 (JP)
(74) Representative: Oxley, Robin John George
(86) International application number: PCT/JP2018/006216
(87) International publication number: WO 2018/155491

(56) References cited:
- EP-A1- 2 413 010
- WO-A1-2016/080151
- WO-A1-2017/057516
- JP-A- 2000 220 770
- JP-A- 2006 236 840
- JP-A- 2016 117 859
- JP-A- 2017 177 548

## Description

### TECHNICAL FIELD

The present disclosure relates to a hydrogen transport component.

### BACKGROUND

In recent years, as for means for transferring a liquid or a gas with a high pressure, a hose is being developed that has a reinforcement layer and an inner tube which is arranged inside the reinforcement layer and is formed from a resin composition, in place of a metal pipe or the like.

For example, there has been proposed a multilayer pressure resistant hose including: an inner layer which functions as an inner tube; an intermediate layer formed from a thermoplastic resin such as polyvinyl chloride, which is laminated on the outer circumference of the inner layer; a reinforcing wire material which is spirally wound along the intermediate layer; and an outer layer which is laminated on the outer circumference of the intermediate layer and the reinforcing wire material (see, for example, Patent Literature 1).

In addition, in recent years, a demand for a hose for supplying hydrogen gas from a hydrogen gas station or the like to a fuel cell of an automobile or the like has been increasing. The hydrogen gas is transferred through a hydrogen transport component such as the hose, at as high a pressure as possible and as low a temperature as possible to improve a filling efficiency, and accordingly the hydrogen transport component is required to improve flexibility under a low temperature environment. Here, in a field of the pressure resistant hose, a gas barrier property under a normal temperature environment has been mainly studied so far, and there is a room for flexibility under a low temperature environment and durability under a low temperature environment to be further improved.

JP 2000220770 A discloses a composite flexible hose having an innermost layer, an intermediate rubber layer, a fiber reinforced layer, and an outer rubber layer laminated in that order from the inside.

EP 2413010 A1 discloses a refrigerant transporting hose which includes a gas barrier layer made of a polyamide resin composition.

JP 2016117859 A discloses a resin composition for a high pressure hydrogen hose containing a polyamide resin and an acid modified polyolefin resin.

### CITATION LIST

### Patent Literature

PTL 1: Japanese Patent Laid-Open No. 2016-212343

### SUMMARY

### (Technical Problem)

Then, an object of the present disclosure is to provide a hydrogen transport component that is excellent in a barrier property for hydrogen gas, also can improve flexibility under a low temperature environment, and consequently can improve durability under a low temperature environment.

### (Solution to Problem)

Specifically, the hydrogen transport component of the present disclosure includes: a hydrogen gas barrier layer formed from a resin composition containing polyamide 11 and a modified olefin-based elastomer; a reinforcement layer arranged on an outside of the hydrogen gas barrier layer; and an outer covering layer containing a polyamide resin and arranged on an outside of the reinforcement layer, wherein a content of the modified olefin-based elastomer in the resin composition is 15% by mass to 50% by mass with respect to the total amount of the polyamide 11 and the modified olefin-based elastomer; and the resin composition is substantially free of a plasticizer, wherein the modified olefin-based elastomer is a modified product of a copolymer of ethylene and 1-butene, and wherein the polyamide resin in the outer covering layer is a polyamide resin having a methylene chain.

### (Advantageous Effect)

According to the present disclosure, the hydrogen transport component can be provided that is excellent in the barrier property for hydrogen gas, also can improve flexibility under a low temperature environment, and consequently can improve durability under a low temperature environment.

### DETAILED DESCRIPTION

Hereinafter, specific embodiments of the present disclosure will be described in detail, but the present disclosure is not limited to the following embodiments at all, and can be implemented with appropriate modifications within the scope of the object of the present disclosure.

The "hose" in the present specification refers to a tubular body that is flexible and can transfer a transfer target (for example, fluid such as liquid or gas).

The "resin" in the present specification is a concept which includes a thermoplastic resin and a thermosetting resin, and does not include a vulcanized rubber.

In the present specification, a numerical range expressed by using "to" means a range including numerical values described before and after "to", as the lower limit value and the upper limit value.

### (Hydrogen transport component)

The hydrogen transport component in the present disclosure (hereinafter, also simply referred to as "transport component") includes: at least a hydrogen gas barrier layer, a reinforcement layer and an outer covering layer; and further other members as needed.

The hydrogen transport component of the present disclosure is not limited in particular, and can be appropriately selected according to the purpose; and preferably includes, for example, a hydrogen transport hose.

### <Hydrogen gas barrier layer>

The above described hydrogen gas barrier layer is a layer that becomes a barrier to hydrogen gas, and is formed of a resin composition. Here, "formed of a resin composition" means that the composition may further contain components other than the resin composition.

The above described resin composition includes at least a polyamide 11 and a modified olefin-based elastomer, and optionally includes other components, but is substantially free of a plasticizer.

In the present specification, "the resin composition is substantially free of a plasticizer" means (1) the case where the resin composition does not contain any plasticizer, and (2) the case where the resin composition contains a plasticizer but the content of plasticizer with respect to the whole resin composition is 3% by mass or less, and preferably 1% by mass or less.

Usually, a plasticizer is added to the resin composition to be used in the hydrogen gas barrier layer of the above described hydrogen transport component, in order to enhance the barrier property for hydrogen gas and flexibility (consequently durability), and to facilitate extrusion molding.

It is considered that when the plasticizer is added to the resin composition, a value of elongation at break generally increases. However, according to the study of the present inventors, it has been found that the flexibility under a low temperature environment tends to become higher in the case where the resin composition is substantially free of the plasticizer, than the case where the plasticizer is added, depending on a type of resin.

The "plasticizer" in the present specification means a compound which is used for the purpose of improving physical properties such as the flexibility of a resin.

The above described plasticizer is not limited in particular, but can be appropriately selected according to the purpose, and examples of the plasticizer include: benzene sulfonamide derivatives such as N-butylbenzene sulfonamide (BBSA), ethyl toluene sulfonamide and N-cyclohexyl toluene sulfonamide; esters of hydroxybenzoic acids such as p-hydroxybenzoic acid-2-ethylhexyl ester, and p-hydroxybenzoic acid-2-decylhexyl ester; esters or ethers of tetrahydrofurfuryl alcohol such as oligo ethylene oxytetrahydrofurfuryl alcohol; esters of hydroxymalonic acid such as a citric acid and oligo ethyleneoxy malonate; and phenol-based compounds.

It can be confirmed whether or not the plasticizer is contained in the above described resin composition, and the amount thereof can be measured, by a known method such as a gas chromatography.

A storage modulus index at -40°C of the above described resin composition is not limited in particular, and can be appropriately selected according to the purpose, but when the storage modulus at -40°C of the resin composition is determined to be 100, to which the modified olefin-based elastomer (flexible component) is not added that will be described later, the index is preferably 30 or more and 100 or less, is more preferably 30 or more and 85 or less, is further preferably 40 or more and 70 or less, and is particularly preferably 40 or more and 50 or less. Due to the storage modulus index of the above described resin composition being controlled within the above described range, sufficient flexibility can be obtained in a hydrogen transport component under a low temperature environment.

The storage modulus at -40°C of the above described resin composition is not limited in particular, and can be appropriately selected according to the purpose, but is preferably 1400 MPa or less, is preferably 600 MPa or more, and is particularly preferably 670 MPa to 820 MPa.

When the above described storage modulus is 1400 MPa or less, the flexibility under a low temperature environment can be further improved, and when the storage modulus is 600 MPa or more, the transport component will not be collapsed even when having been bent.

If the above described elastic modulus is 670 Pa or more and 820 MPa or less, the transport component can be used without breaking the resin layer even when the product is bent or twisted when the transport component has been used.

The above described storage modulus can be measured with the use of DMA 7100 (testing machine for dynamic viscoelasticity measurement) made by Hitachi High-Technologies Corporation. Specifically, a measurement sample plate (size: 10 mm×40 mm×1 mm thick) is attached to a chuck which is connected to a load cell for the test, and is then charged into a cooling heating furnace. After that, a temperature dispersion spectrum of dynamic viscoelasticity is obtained in a temperature range of -150°C to 150°C, at a rate of temperature rise of 3°C/min, in a strain quantity of 0.01%, and at a frequency of 1 Hz. The storage modulus at -40°C can be obtained from the obtained temperature dispersion spectrum of the dynamic viscoelasticity in the temperature range of -150°C to 150°C.

The hydrogen permeability coefficient index at 30°C of the above described resin composition is not limited in particular, and can be appropriately selected according to the purpose, but when the hydrogen permeability coefficient index at 30°C of the resin composition is determined to be 100, to which the modified olefin-based elastomer (flexible component) is not added that will be described later, the index is preferably 500 or less, is more preferably 400 or less, and is particularly preferably 300 or less. Due to the hydrogen permeability coefficient index of the above described resin composition being controlled within the above described range, the amount of hydrogen leakage of the hydrogen transport component can be reduced.

The hydrogen permeability coefficient at 30°C of the above described resin composition is not limited in particular, and can be appropriately selected according to the purpose, but the coefficient is preferably 3.74×10⁻¹⁰ [cc×cm/cm²×s×cmHg] or less, and is more preferably 1.54×10⁻¹⁰ [cc×cm/cm²×s×cmHg] or more and 2.64×10⁻¹⁰ [cc×cm/cm²×s×cmHg] or less.

When the above described hydrogen permeability coefficient is 3.74×10⁻¹⁰ [cc×cm/cm²×s×cmHg] or less, the barrier property for hydrogen gas can be improved.

When the above described hydrogen permeability coefficient is 1.54×10⁻¹⁰ [cc×cm/cm²×s×cmHg] or more, the low temperature elastic modulus can be further improved while the barrier property for hydrogen gas is not largely impaired, and furthermore, when the coefficient is 2.64×10⁻¹⁰ [cc×cm/cm²×s×cmHg] or less, the barrier property for hydrogen gas is further improved.

The above described hydrogen permeability coefficient can be measured with the use of a GTR-11A (gas permeability measuring device) made by GTR-Tek under conditions of a humidity of 20% and a temperature of 30°C. Specifically, a measurement sample (diameter of 13 mm, and thickness of 0.2 mm to 0.3 mm) is set in the cell, the inside of the cell is vacuum deaerated, and thereby the influence of surrounding gas is removed. After that, hydrogen gas is passed which is a gas to be measured and is set at a pressure of 0.6 MPa, and the amount of hydrogen gas which has permeated through the film is determined with the use of the gas chromatography (TCD method, and carrier gas of Ar), by a calibration curve method. After that, the hydrogen permeability coefficient is calculated from a permeation area, a thickness and a pressure difference. Incidentally, a smaller value of the above described hydrogen permeability coefficient means that the result is better.

### <<Polyamide 11>>

The above described polyamide 11 (nylon 11) is a preferable resin in terms of molding processability, pressure resistance and resistance to repeated impulse of the hydrogen transport component.

By the use of the above described polyamide 11, the flexibility at low temperature can be improved as compared with a polyamide having a short alkyl chain such as polyamide 6 and polyamide 66. In addition, the pressure resistance, the resistance to repeated impulse, and the durability under a low temperature environment can be improved to a higher level than the case where other resins are used.

### <<Modified olefin-based elastomer>>

The above described modified olefin-based elastomer is preferably a flexible component of which the Young's modulus thereof at 23°C is lower than that of the above described polyamide 11.

A glass transition temperature (Tg) of the above described modified olefin-based elastomer is not limited in particular, and can be appropriately selected according to the purpose; but is preferably 0°C or lower, and is more preferably -20°C or lower, in terms of improving the flexibility at low temperature.

By including the modified olefin-based elastomer having a glass transition temperature of 0°C or lower, the resin composition can maintain an adequate elasticity of a skeleton member even under a low temperature environment, and can improve the durability of the skeleton member.

Examples of the modified olefin-based elastomer include modified products of olefin-based elastomers such as polyethylene, polypropylene, an ethylene-propylene rubber, an ethylene-1-butene copolymer, poly-α-olefin, and a styrene-ethylene-butylene-styrene copolymer. These may be used singly or in combinations of two or more.

According to the present invention, the modified product is the ethylene-1-butene copolymer, in such terms that more excellent elasticity and durability are obtained,

Furthermore, it is preferable that maleic anhydride or an epoxy-terminated (meth)acrylate ester is copolymerized or grafted with at least one part of the above described modified olefin-based elastomer. The modified olefin-based elastomer (flexible component) in which these compounds are copolymerized or grafted reacts with a terminal group of the polyamide resin, thereby the dispersibility in the resin composition is improved, and accordingly the elasticity and the durability of the skeleton member are further improved. Here, "(meth)acrylate ester" refers to an acrylate ester and/or a methacrylate ester.

The content of the above described modified olefin-based elastomer in the above described resin composition is not limited in particular as long as the content is 15% by mass to 50% by mass with respect to the total amount of the above described polyamide 11 and the above described modified olefin-based elastomer, and can be appropriately selected according to the purpose; but the lower limit is preferably 20% by mass or more; and the upper limit is preferably 40% by mass or less, and is more preferably 30% by mass or less.

When the content of the above described modified olefin-based elastomer in the above described resin composition is 15% by mass or more, adequate elasticity can be ensured even under a low temperature environment; and when the content is 50% by mass or less, the effect by the above described polyamide 11 is sufficiently exhibited, and in addition, the hydrogen permeability coefficient can be maintained sufficiently adequate.

### <<Other components>>

The above described resin composition may contain other components as long as the other components do not impair the effects of the present disclosure.

The above described other components are not limited in particular, can be appropriately selected according to the purpose, and include, for example, an age resistor, a colorant, a filler, an antistatic agent, a heat stabilizer and a flame retardant. These may be used singly or in combinations of two or more.

### <Hydrogen transport hose>

The above described hydrogen transport hose includes: at least a hydrogen gas barrier layer, which is formed of the above described resin composition; and an inner tube of the hose, a reinforcement layer, an outer covering layer, and other members, as needed.

A portion to which the above described hydrogen gas barrier layer is applied is not limited in particular, and can be appropriately selected according the purpose, but is preferably the inner tube of the hose. Here, "inner tube of hose" means a resin layer of the inner side of the hydrogen transport hose, and may have further another layer in the inner side of the inner tube of the hose.

It is more preferable that the hydrogen gas barrier layer, which is formed of the above described resin composition, exists at a position at which the barrier layer comes in contact with the hydrogen gas that is an object to be transferred in the hose. The hydrogen gas barrier layer, which is formed of the above described resin composition, is arranged in a position at which the barrier layer comes in contact with the hydrogen gas that is the object to be transferred in the hose; and thereby the hose can improve the flexibility even when the hose is used under a low temperature environment or transfers the hydrogen gas therethrough that is the object of low temperature to be transferred, and can consequently improve the durability under a low temperature environment.

### <<Inner tube of hose>>

It is preferable that the above described inner tube of the hose is a formed product of a resin composition which has an elongation at break of 20% or more under an environment of -40°C, and is substantially free of a plasticizer.

When the above described inner tube of the hose is excellent in durability under a low temperature environment, the inner tube is suitable as a member for a hydrogen transport hose which is used under a low temperature environment, or a hydrogen transport hose for transferring hydrogen gas which is the object of low temperature to be transferred.

It is preferable that the above described inner tube of the hose is formed with the use of the above described resin composition. The physical property, the component and the like of the above described resin composition are as described above.

A method for forming the above described inner tube of the hose is not limited in particular, and can be appropriately selected according to the purpose; and the inner tube can be formed by a known method.

It is preferable that the above described inner tube of the hose exists in a position at which the inner tube comes in contact with the hydrogen gas that is transferred in the hydrogen transport hose and is the object to be transferred. The above described inner tube of the hose may be formed of only one layer, or two or more layers.

An inner diameter of the above described inner tube of the hose (specifically, maximum diameter of hollow portion in cross section of inner tube of hose) is not limited in particular, and can be selected according to a desired strength, durability and the like, but is preferably 3.0 mm or more, is more preferably 4.0 mm or more, in addition, is preferably 51.0 mm or less, and is more preferably 25.4 mm or less.

The thickness of the above described inner tube of the hose (specifically, thickness of portion formed of resin composition in cross section of inner tube of hose) is not limited in particular, and can be selected according to the desired strength, durability and the like, but is preferably 0.05 mm or more, is more preferably 0.5 mm or more, in addition, is preferably 10 mm or less, and is more preferably 5 mm or less.

### <<Reinforcement layer>>

The above described hydrogen transport hose has a reinforcement layer arranged on the outside of the inner tube of the hose. The above described hydrogen transport hose has a reinforcement layer, and thereby can obtain a sufficient strength even when transferring the hydrogen gas which is the object to be transferred, at high pressure. The hydrogen transport hose in this case may have another layer between the reinforcement layer and the inner tube of the hose, and may have another layer than the outer covering layer which will be described later, on the outside of the reinforcement layer. The above described reinforcement layer may be only one layer, or two or more layers.

A material of the above described reinforcement layer is not limited in particular, and can be appropriately selected according to the desired strength, durability and the like. The examples of the material include: organic materials such as aramid, polyparaphenylene benzobisoxazole (PBO), polyketone (PK), polyether ether ketone (PEEK), nylon (PA), polyarylate, polyimide, polylactic acid and a fluorine-containing resin; and inorganic materials such as metal, glass and carbon.

The thickness of the above described reinforcement layer is not limited in particular, and can be selected according to desired the strength, durability and the like; but is preferably 0.2 mm or more and is more preferably 1.0 mm or more; and is preferably 20 mm or less and is more preferably 10 mm or less.

A method for forming the above described reinforcement layer is not limited in particular, and can be appropriately selected according to the purpose. The examples of the method include: a method of winding a fibrous or cord-like material for the reinforcement layer around the outside of the inner tube of the hose in a spiral or blade shape; and a method of wrapping a material for the reinforcement layer, which has been formed into a cloth shape or knitted fabric, around the outside of a hose tube.

### <<Outer covering layer>>

The above described hydrogen transport hose further has an outer covering layer arranged on the outside of the reinforcement layer. The above described hydrogen transport hose can further improve the strength of the hose by having the outer covering layer, and can protect the hose from an external environment (rainwater, chemical agents and the like).

A material for the above described outer covering layer contains a polyamide resin, and can be appropriately selected according to the purpose.

When the material of the outer covering layer contains the polyamide resin, the outer covering layer can protect the reinforcement layer.

According to the present invention, the polyamide resin of the material for the outer covering layer has a methylene chain. Examples of the polyamide resin having the methylene chain include polyamide 11, polyamide 12, polyamide 610 and polyamide 1010.

By using the polyamide resin having the methylene chain, the outer covering layer can both protect the reinforcement layer and prevent cracking at the time of bending at low temperature and normal temperature.

Examples of other materials for the outer covering layer than the polyamide resin include: resins such as polyurethane, polyester and polyolefin; and elastomers.

It is preferable for the polyamide resin of the material for the outer covering layer to have a methylene chain having 7 or more carbon atoms in a constituent unit which constitutes the polyamide resin, and is more preferable to have a methylene chain having 9 or more carbon atoms, from the viewpoint of preventing cracking at the time of the bending at low temperature and normal temperature. The upper limit of the carbon number of the methylene chain is not limited in particular, but is preferably 30 or less.

Incidentally, in regard to the methylene chain mentioned here, for example, when there are two or more types of methylene chains (for example, in the case where the resin has a methylene chain of 5 carbon atoms and a methylene chain of 8 carbon atoms) in the constituent unit which constitutes the polyamide resin, the number of larger methylene chains shall be adopted.

### <<Other members>>

The above described other members are not limited in particular, and can be appropriately selected according to the purpose: and examples of the members include a core metal fitting which is arranged in the inside of the above described inner tube of the hose, and a metal fastener arranged on the outside of the above described outer covering layer.

As described above, in the hydrogen transport component according to the present disclosure, the modified olefin-based elastomer is a maleic acid-modified olefin, and thereby a polyamide structure and a maleic acid structure form a sea-island structure in a state of forming an acid amide bond, which can accordingly prevent phase separation between both of the structures in use.

Furthermore, in the hydrogen transport component of the present disclosure, the modified olefin-based elastomer is a modified product of a copolymer of ethylene and 1-butene, which can thereby effectively achieve a low elastic modulus by addition of a small amount.

Furthermore, in the hydrogen transport component of the present disclosure, the content of the modified olefin-based elastomer in the resin composition is 20% by mass to 30% by mass with respect to the total amount of the polyamide 11 and the modified olefin-based elastomer, which can thereby improve the barrier property for hydrogen gas and also can further improve the flexibility under a low temperature environment.

Furthermore, in the hydrogen transport component of the present disclosure, the storage modulus at -40°C of the resin composition is 1400 MPa or less, which can thereby further improve the flexibility under a low temperature environment.

Furthermore, in the hydrogen transport component of the present disclosure, the storage modulus at -40°C of the resin composition is 600 MPa or more, which thereby improves the flexibility and characteristics of dynamic fatigue resistance under low temperature of the inner layer material in the transport component, and can remarkably extend a product life.

Furthermore, in the hydrogen transport component of the present disclosure, the hydrogen permeability coefficient at 30°C of the resin composition is 3.74×10⁻¹⁰ [cc×cm/cm²×s×cmHg] or less, which can thereby improve the barrier property for hydrogen gas.

Furthermore, in the hydrogen transport component of the present disclosure, it is preferable that the above described hydrogen transport component is the hydrogen transport hose.

### EXAMPLES

The present disclosure will be more specifically described below with reference to Examples, but the present disclosure is not limited to the description in any way, and can be appropriately changed without changing the gist of the present disclosure.

### (Examples 1 to 4 and Comparative Examples 1 to 4)

Each resin composition was prepared on the basis of each blend content provided in Table 1. The numbers in formulation in Table 1 represent parts by mass.

Each of the resin compositions described in Table 1 and each of the hydrogen transport hoses were subjected to the following measurements and assessments, which included: the hydrogen gas barrier layer, which was produced with the use of the resin composition and was an inner tube of a hose; the reinforcement layer which was arranged on the outside of the hydrogen gas barrier layer and was formed of a steel wire; and the outer covering layer which was arranged on the outside of the reinforcement layer and was formed of the material provided in Table 1. The results are provided in Table 1.

### <Measurement of storage modulus at -40°C>

The value of "storage modulus at -40°C" was measured with the use of DMA 7100 (testing machine for dynamic viscoelasticity measurement) made by Hitachi High-Technologies Corporation. A measurement sample plate (size: 10 mm×40 mm×1 mm thick) that was produced with the use of each of the resin compositions described in Table 1 was attached to a chuck which was connected to a load cell for the test, and was then charged into a cooling heating furnace. After that, a temperature dispersion spectrum of dynamic viscoelasticity was obtained in a temperature range of -150°C to 150°C, at a rate of temperature rise of 3°C/min, in a strain quantity of 0.01%, and at a frequency of 1 Hz. The storage modulus at -40°C was obtained from the obtained temperature dispersion spectrum of the dynamic viscoelasticity in the temperature range of -150°C to 150°C. Table 1 provides measured values, and relative values at the time when the measured value of Comparative Example 1 is set at 100.

### <Measurement of hydrogen permeability coefficient at 30°C>

The value of "hydrogen permeability coefficient at 30°C" was measured under conditions of a humidity of 20% and a temperature of 30°C with the use of GTR-11A (gas permeation measuring device) made by GTR Tech. A measurement sample (diameter of 13 mm, and thickness of 0.2 mm to 0.3 mm) which was produced with the use of each of the resin compositions described in Table 1 was set in the cell, the inside of the cell was vacuum deaerated, and thereby the influence of surrounding gas was removed. After that, hydrogen gas was passed which was a gas to be measured and was set at a pressure of 0.6 MPa, and the amount of hydrogen gas which permeated through the film was determined with the use of the gas chromatography (TCD method, and carrier gas of Ar), by a calibration curve method. After that, the hydrogen permeability coefficient was calculated from the permeation area, the thickness and the pressure difference. Table 1 provides measured values, and relative values at the time when the measured value of Comparative Example 1 is set at 100. Incidentally, a smaller value of the above described hydrogen permeability coefficient means that the result is better.

### <Durability test>

### <<Cycle assessment>>

Under conditions of a pressure of 70 MPa and an atmosphere temperature of -40°C, pressurization and depressurization between approximately 0 MPa and 70 MPa was repeated on the above described hydrogen transport hose which was produced with the use of each of the resin compositions described in Table 1, while hydrogen gas that is not frozen at low temperature was used as an object to be transferred; the number of repetitions (number of cycles) of the pressurization and depressurization was measured until the inner tube of the hose was broken; and the result was assessed according to the following assessment criteria. When the assessment is excellent or good, the durability can be determined to be sufficient even when the object to be transferred is transferred at the low temperature and the high pressure.

### <<<Assessment criteria>>>

Excellent: 200000 pressurization/depressurization cycles or more
Good: 100000 pressurization/depressurization cycles or more
Poor: less than 100000 pressurization/depressurization cycles

### <<Appearance assessment>>

As for appearance assessment, an appearance of the hydrogen transport hose was assessed after the above described durability test, according to the following criteria.

### <<<Assessment criteria>>>

Excellent: no abnormality
Good: there is a trace of swelling on the shell, but no abnormality
Fair: swelling on the shell
Poor: breakage/shell breakage

**[Table 1]**

| | | | Comparative Example 1 | Comparative Example 2 | Comparative Example 3 | Example 1 | Example 2 | Example 3 | Example 4 | Comparative Example 4 |
|---|---|---|---|---|---|---|---|---|---|---|
| Formulation | Polyamide -based polymer | Polyamide 11*¹ | 100 | 90 | 40 | 85 | 80 | 70 | 50 | - |
| | | Polyamide 11*³ | - | - | - | - | - | - | - | 100 |
| | Modified olefin-based elastomer (flexible component) | Maleic acid-modified product of copolymer of ethylene and 1-butene*² | 0 | 10 | 60 | 15 | 20 | 30 | 50 | 0 |
| Outer layer | Type of material | | Polyamide 610*⁴ | Polyamide 610*⁴ | Polyamide 6*⁵ | Polyamide 12*⁶ | Polyamide 1010*⁷ | Polyamide 12*⁶ | Polyamide 1012*⁸ | Polyamide 6*⁵ |
| Measurement and assessment | Storage modulus at -40°C (MPa) | Measured value (Pa) | 1.61×10⁹ | 1.39×10⁹ | 4.43×10⁸ | 1.30×10⁹ | 1.21×10⁹ | 1.03×10⁹ | 6.79×10⁸ | 2.34×10⁹ |
| | | Measured value (MPa) | 1610 | 1391 | 443 | 1302 | 1212 | 1033 | 679 | 2340 |
| | | Relative value | 100 | 86 | 28 | 81 | 75 | 64 | 42 | 145 |
| | Hydrogen permeability coefficient at 30°C | Measured value (cc·cm/cm²·s·cmHg) | 7.47×10⁻¹¹ | 1.11×10⁻¹⁰ | 1.11×10⁻⁹ | 1.40×10⁻¹⁰ | 1.54×10⁻¹⁰ | 2.03×10⁻¹⁰ | 3.73×10⁻¹⁰ | 2.44×10⁻¹⁰ |
| | | Relative value | 100 | 149 | 1486 | 187 | 207 | 272 | 499 | 145 |
| | Durability Test | Number of cycles | 75783 | 86125 | 147586 | 152856 | 187555 | 205005 | 165565 | 5000 |
| | | Cycle assessment | Poor | Poor | Good | Good | Good | Excellent | Good | Poor |
| | | Assessment of appearance | Good | Good | Poor | Excellent | Excellent | Excellent | Good | Poor |

^{∗}1: Polyamide 11 (PA11); made by Arkema Company, trade name: Rilsan BESNBKTL: not containing plasticizer
^{∗}2: Made by Mitsui Chemicals Co., Ltd., trade name: Tafmer MMH 7010
^{∗}3: Polyamide 11 (PA11); made by Arkema Company, trade name: Rilsan BESNP 40 TL: containing 9.2% by mass of plasticizer
^{∗}4: Polyamide 610; made by Arkema Company, trade name: Hiprolon 70NN
^{∗}5: Polyamide 6; made by Toray Industries, Inc., trade name: CM1041LO
^{∗}6: Polyamide 12; made by Arkema Company, trade name: Rilsan AESNTL
^{∗}7: Polyamide 1010; made by Arkema Company, trade name: Hiprolon 200NN
^{∗}8: Polyamide 1012; made by Arkema Company, trade name: Hiprolon 400NN

As is provided in the results of Table 1, in Examples 1 to 4 in which the content of the modified olefin-based elastomer is 15% by mass to 50% by mass with respect to the total amount of the polyamide 11 and the modified olefin-based elastomer, in the durability assessment, 100 thousand times or more of cycles can be maintained, and the appearance is also maintained.

On the other hand, in Comparative Examples 1 to 4 in which the content of the modified olefin-based elastomer is less than 15% by mass or more than 50% by mass with respect to the total amount of the polyamide 11 and the modified olefin-based elastomer, in the durability assessment, the cycles have been below 100 thousand times of cycles, and/or shell breakage has been observed; and the durability has been insufficient.

It has been found from the above results that by using the resin composition of the present disclosure, it becomes possible to manufacture an inner tube of a hose and the hose which are excellent in the flexibility under a low temperature environment.

## Claims

1. A hydrogen transport component comprising: a hydrogen gas barrier layer formed from a resin composition containing polyamide 11 and a modified olefin-based elastomer; a reinforcement layer arranged on an outside of the hydrogen gas barrier layer; and an outer covering layer containing a polyamide resin and arranged on an outside of the reinforcement layer,
wherein a content of the modified olefin-based elastomer in the resin composition is 15% by mass to 50% by mass with respect to the total amount of the polyamide 11 and the modified olefin-based elastomer; and the resin composition is substantially free of a plasticizer,
wherein the modified olefin-based elastomer is a modified product of a copolymer of ethylene and 1-butene, and
wherein the polyamide resin in the outer covering layer is a polyamide resin having a methylene chain.

2. The hydrogen transport component according to claim 1, wherein the modified olefin-based elastomer is a maleic acid-modified olefin.

3. The hydrogen transport component according to claim 1 or 2, wherein the content of the modified olefin-based elastomer in the resin composition is 20% by mass to 30% by mass with respect to the total amount of the polyamide 11 and the modified olefin-based elastomer.

4. The hydrogen transport component according to any one of claims 1 to 3, wherein the resin composition has a storage modulus at -40°C of 1400 MPa or less.

5. The hydrogen transport component according to any one of claims 1 to 4, wherein the resin composition has a storage modulus at -40°C of 600 MPa or more.

6. The hydrogen transport component according to any one of claims 1 to 5, wherein the resin composition has a hydrogen permeability coefficient at 30°C of 3.74×10⁻¹⁰ [cc×cm/cm²×s×cmHg] or less.

7. The hydrogen transport component according to any one of claims 1 to 6, wherein the hydrogen transport component is a hydrogen transport hose.

## Patentansprüche

1. Wasserstofftransportbestandteil umfassend: eine Wasserstoffgasbarriereschicht, die aus einer Harzzusammensetzung gebildet ist, die Polyamid 11 und ein Elastomer auf Basis von modifiziertem Olefin enthält; eine Verstärkungsschicht, die an einer Außenseite der Wasserstoffgasbarriereschicht angeordnet ist; und eine äußere Bedeckungsschicht, die Polyamidharz enthält und an einer Außenseite der Verstärkungsschicht angeordnet ist,
wobei ein Gehalt des Elastomers auf Basis von modifiziertem Olefin in der Harzzusammensetzung 15 Masse-% bis 50 Masse-% mit Bezug auf die Gesamtmenge des Polyamids 11 und des Elastomers auf Basis von modifiziertem Olefin beträgt und die Harzzusammensetzung im Wesentlichen frei von Weichmacher ist,
wobei das Elastomer auf Basis von modifiziertem Olefin ein modifiziertes Produkt eines Copolymers von Ethylen und 1-Buten ist, und
wobei das Polyamidharz in der äußeren Bedeckungschicht ein Polyamidharz ist, das eine Methylenkette aufweist.

2. Wasserstofftransportbestandteil nach Anspruch 1, wobei das Elastomer auf Basis von modifiziertem Olefin ein durch Maleinsäure modifiziertes Olefin ist.

3. Wasserstofftransportbestandteil nach Anspruch 1 oder 2, wobei der Gehalt des Elastomers auf Basis von modifiziertem Olefin in der Harzzusammensetzung 20 Masse-% bis 30 Masse-% mit Bezug auf die Gesamtmenge des Polyamids 11 und des Elastomers auf Basis von modifiziertem Olefin beträgt.

4. Wasserstofftransportbestandteil nach einem der Ansprüche 1 bis 3, wobei die Harzzusammensetzung einen Speichermodul bei -40 °C von 1400 MPa oder weniger aufweist.

5. Wasserstofftransportbestandteil nach einem der Ansprüche 1 bis 4, wobei die Harzzusammensetzung einen Speichermodul bei -40 °C von 600 MPa oder mehr aufweist.

6. Wasserstofftransportbestandteil nach einem der Ansprüche 1 bis 5, wobei die Harzzusammensetzung einen Wasserstoffdurchlässigkeitskoeffizienten bei 30 °C von 3,74×10⁻¹⁰ [cc×cm/cm²×s×cmHg] oder weniger aufweist.

7. Wasserstofftransportbestandteil nach einem der Ansprüche 1 bis 6, wobei der Wasserstofftransportbestandteil ein Wasserstofftransportschlauch ist.

## Revendications

1. Constituant de transport d'hydrogène comprenant: une couche formant barrière au gaz hydrogène formée à partir d'une composition de résine contenant du polyamide 11 et un élastomère à base d'oléfine modifiée; une couche de renfort disposée sur un extérieur de la couche formant barrière au gaz hydrogène; et une couche de recouvrement externe contenant une résine de polyamide et disposée sur l'extérieur de la couche de renfort,
une teneur de l'élastomère à base d'oléfine modifiée dans la composition de résine étant de 15 % en masse à 50 % en masse par rapport à la quantité totale du polyamide 11 et de l'élastomère à base d'oléfine modifiée; et la composition de résine étant sensiblement exempte d'agent plastifiant,
l'élastomère à base d'oléfine modifiée étant un produit modifié d'un copolymère d'éthylène et de 1-butène, et
la résine de polyamide dans la couche de recouvrement externe étant une résine de polyamide ayant une chaîne méthylène.

2. Constituant de transport d'hydrogène selon la revendication 1, l'élastomère à base d'oléfine modifiée étant une oléfine modifiée avec de l'acide maléique.

3. Constituant de transport d'hydrogène selon la revendication 1 ou 2, la teneur de l'élastomère à base d'oléfine modifiée dans la composition de résine étant de 20 % en masse à 30 % en masse par rapport à la quantité totale du polyamide 11 et de l'élastomère à base d'oléfine modifiée.

4. Constituant de transport d'hydrogène selon l'une quelconque des revendications 1 à 3, la composition de résine ayant un module de stockage à -40 °C de 1 400 MPa ou moins.

5. Constituant de transport d'hydrogène selon l'une quelconque des revendications 1 à 4, la composition de résine ayant un module de stockage à -40 °C de 600 MPa ou plus.

6. Constituant de transport d'hydrogène selon l'une quelconque des revendications 1 à 5, la composition de résine ayant un coefficient de perméabilité à l'hydrogène à 30 °C de 3.74×10⁻¹⁰ [cc×cm/cm2×s×cmHg] ou moins.

7. Constituant de transport d'hydrogène selon l'une quelconque des revendications 1 à 6, le constituant de transport d'hydrogène étant un tuyau de transport d'hydrogène.
